# FASCICULE DE BREVET EUROPEEN

(11) **EP 3 823 739 B1**
(45) Date de publication et mention de la délivrance du brevet: **13.12.2023**
(21) Numéro de dépôt: 19740007.0
(22) Date de dépôt: 18.07.2019
(51) Int. Cl.: B01D 53/047

(54) **SYSTÈME DE PURIFICATION D'UN MÉLANGE DE GAZ, PROCÉDÉ ET INSTALLATION ASSOCIÉS**
SYSTEM ZUR REINIGUNG EINES GASGEMISCHES UND ZUGEHÖRIGES VERFAHREN UND ANLAGE
SYSTEM FOR PURIFYING A GAS MIXTURE, AND ASSOCIATED PROCESS AND PLANT

(30) Priorité: 20.07.2018 FR 1856747
(43) Date de publication de la demande: 26.05.2021
(73) Titulaire: ENGIE, 92400 Courbevoie (FR)
(72) Inventeur: BENOIT, Laurent, 75018 PARIS (FR)
(74) Mandataire: Lavoix
(86) Numéro de dépôt international: PCT/EP2019/069411
(87) Numéro de publication internationale: WO 2020/016374

(56) Documents cités:
- US-A- 2 562 334
- US-A- 5 220 796
- US-A- 5 846 295
- US-A- 5 938 819
- US-A1- 2004 118 279

## Description

La présente invention concerne un système de purification d'un mélange de gaz comprenant au moins un premier gaz à purifier et un deuxième gaz à extraire, le système de purification étant selon le préambule de la revendication 1.

L'invention concerne notamment la purification d'un mélange gazeux riche en méthane, par exemple d'un flux de biogaz ou de gaz naturel déjà partiellement épuré. Un tel flux de gaz comprend encore des impuretés telles que du dioxyde de carbone, avec une concentration typiquement de l'ordre de 3% en volume.

Afin que le gaz riche en méthane soit propre à la distribution, et notamment afin de pouvoir le liquéfier ponctuellement à des fins de transport et/ou de stockage, il est nécessaire de réduire le taux de dioxyde de carbone, et notamment en dessous de 2300 ppmv (partie par million volumique, ou 0,23% en volume).

Les méthodes connues pour la séparation du dioxyde de carbone d'un flux riche en méthane, qui permettent d'atteindre ce niveau de pureté, comprennent la séparation sur membrane, le lavage à l'eau, aux amines ou avec un solvant spécifique, le passage sur un tamis moléculaire régénérés à la chaleur et/ou à la pression (PSA, PTA, PTSA) et l'épuration cryogénique.

Ces méthodes ne donnent pas toujours entière satisfaction. En effet de tels dispositifs nécessitent un apport conséquent en énergie, ainsi que des travaux de mise en place généralement longs et coûteux. Ils ne sont donc pas bien adaptés pour des installations de purification de gaz fonctionnant ponctuellement, voire installées auprès des sources de gaz de manière temporaires.

Par ailleurs, US 2004/118972 A1 divulgue un procédé selon le préambule de la revendication 1.

Un but de l'invention est donc de fournir une méthode de purification de gaz n'impliquant pas d'équipements consommant beaucoup d'énergie et nécessitant des travaux d'installation conséquents.

A cet effet, l'invention a pour objet un système de purification selon la revendication 1.

Selon des modes de réalisation particuliers, le système selon l'invention présente les caractéristiques des revendications dépendantes 2 à 4.

L'invention a également pour objet un procédé de purification d'un mélange de gaz comprenant au moins un premier gaz à purifier et un deuxième gaz à extraire, mettant en oeuvre un système de purification tel que décrit plus haut, le procédé étant selon la revendication 5.

Selon des modes de réalisation particuliers, le procédé selon l'invention présente les caractéristiques des revendications dépendantes 6 ou 7.

L'invention a en outre pour objet une installation de production de gaz liquéfié, comprenant un système de purification d'un mélange de gaz tel que décrit plus haut, l'installation étant selon la revendication 8.

L'invention sera mieux comprise à la lecture de la description qui va suivre, donnée uniquement à titre d'exemple et faite en référence aux dessins annexés, parmi lesquels :

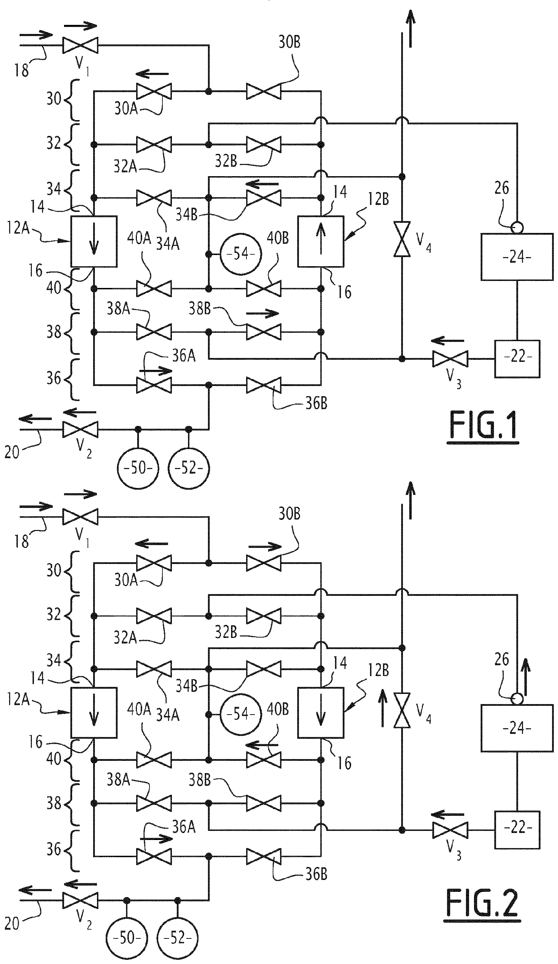

- les figures 1 à 6 représentent un système de purification selon l'invention au cours de différentes étapes d'un procédé de purification de gaz.

Un système de purification de gaz 10 est représenté sur les figures 1 à 6.

Dans tout ce qui suit, les termes « entrée » et « sortie », « amont » et « aval » sont entendus relativement au sens prévu d'écoulement du mélange de gaz à purifier à travers le système de purification 10.

De plus, toutes les pressions sont exprimées en bars absolus, c'est-à-dire relativement à un vide parfait.

Le système de purification 10 est destiné à purifier un mélange de gaz, contenant au moins un premier gaz à récupérer et un deuxième gaz à extraire.

Par exemple, le mélange de gaz est du biogaz ou bien du gaz naturel, issu d'une première purification et contenant encore trop d'impuretés pour être liquéfié. Dans cet exemple, le gaz à récupérer est le méthane CH₄, et le gaz à éliminer est le dioxyde de carbone CO₂, présent dans le mélange avec un taux initial de l'ordre de 3% en volume.

Le système de purification 10 est alors propre à extraire le dioxyde de carbone du mélange gazeux riche en méthane, pour en réduire la teneur en dessous de 2300 ppmv.

Le système 10 comprend au moins deux colonnes de purification, par exemple une première colonne 12A et une deuxième colonne 12B, chaque colonne 12A, 12B présentant une entrée 14 et une sortie 16 respective.

Chaque colonne 12A, 12B contient un matériau propre à adsorber le deuxième gaz. Le matériau n'adsorbe le premier gaz à récupérer que de manière négligeable.

Dans le cas où le deuxième gaz est le dioxyde de carbone, le matériau contenu dans les colonnes est notamment de la zéolithe microporeuse.

Le système de purification 10 comprend une alimentation 18, propre à délivrer le mélange de gaz à purifier, contrôlée par une première vanne V1 d'alimentation, et un collecteur 20 propre à recevoir le premier gaz purifié, contrôlé par une deuxième vanne V2 de sortie.

L'alimentation 18 est adaptée pour délivrer le mélange de gaz à purifier avec une pression d'entrée comprise entre 5,5 bar et 8 bar.

Le système de purification 10 comprend également un dispositif externe 22, mettant en oeuvre une activité dont résulte une émission fatale de gaz neutre.

Par fatal, on entend que l'activité mise en oeuvre par le dispositif externe 22 génère un flux de gaz neutre non valorisé, et notamment rejeté dans l'atmosphère comme déchet.

Le gaz neutre est un gaz très faiblement adsorbé sur le matériau contenu dans les colonnes 12A, 12B, et dont le rejet dans l'atmosphère ne pose pas de problèmes. Le gaz neutre est notamment du diazote N₂.

Le dispositif externe 22 est par exemple un dispositif de refroidissement utilisant de l'azote liquide, mettant en oeuvre un échange thermique qui vaporise l'azote liquide, et rejetant du diazote sous forme gazeuse.

Avantageusement, le dispositif externe 22 est un dispositif de liquéfaction de gaz, et notamment de liquéfaction de méthane.

Le dispositif externe 22 comprend un réservoir 24, notamment un réservoir d'azote liquide, contenant une réserve de gaz neutre alimentant son activité.

Le dispositif externe 22 est relié fluidiquement aux colonnes 12A, 12B de manière à récupérer le gaz neutre et à le convoyer vers chaque colonne 12A, 12B à travers une troisième vanne V3.

Afin d'évacuer le flux de gaz neutre fatal lorsque le système de purification ne l'utilise pas, une quatrième vanne V4 est disposée en aval de la troisième vanne V3, et est agencée pour mettre en communication la troisième vanne V3 avec l'atmosphère externe.

Le dispositif externe 22 est adapté pour délivrer le flux de gaz neutre fatal avec une température comprise entre 5°C et 40°C, notamment entre 5°C et 30°C, et avec une pression comprise entre 1,5 bar et 10 bar, notamment entre 1,5 bar et 5 bar.

Le flux de gaz neutre fatal présente un taux de pureté important, notamment supérieur à 99% et avantageusement supérieur ou égal à 99,9%, de sorte que le passage du gaz neutre provoque une désorption du deuxième gaz adsorbé sur le matériau adsorbant des colonnes 12A, 12B.

L'acheminement du gaz neutre vers les colonnes 12A, 12B se fait sans mettre en oeuvre de dispositif de compression ou de chauffage, la température et la pression du flux résultant uniquement de l'activité mise en oeuvre dans le dispositif externe 22.

Le système de purification 10 comprend de plus une source secondaire 26 de gaz neutre sous forme gazeuse, reliée fluidiquement aux colonnes 12A, 12B. La source secondaire est propre à délivrer un flux piston de gaz neutre de manière intermittente et contrôlée en direction des entrées 16 des colonnes 12A, 12B, sans apport important d'énergie externe.

Dans le cas où le dispositif externe 22 est un dispositif de refroidissement à azote liquide comprenant un réservoir 24, la source secondaire 26 est avantageusement un vaporiseur d'azote liquide, adapté pour prélever une petite quantité d'azote liquide depuis le réservoir 24 et le vaporiser au contact de la température ambiante, pour délivrer le flux piston.

En variante, la source secondaire 26 est un réservoir de gaz pressurisé, notamment sous forme de bouteille.

La source secondaire 26 est notamment adaptée pour délivrer le flux piston avec une pression de piston supérieure à la pression d'entrée du mélange de gaz d'au moins 0,5 bar, notamment d'au moins 1 bar, et d'au plus 2 bar. La pression piston est donc comprise entre 6 bar et 10 bar, selon la valeur de la pression d'entrée.

Le système de purification 10 comprend en outre trois étages de vannes situés en amont des colonnes 12A, 12B, comprenant un étage d'alimentation 30, un étage de piston 32 et un étage de purge amont 34, ainsi que trois étages de vannes situés en aval des colonnes 12A, 12B, comprenant un étage de sortie 36, un étage de régénération 38 et un étage de purge aval 40.

L'étage d'alimentation 30 comprend, pour chaque colonne 12A, 12B une vanne d'alimentation respective 30A, 30B, propre à mettre en communication indépendamment l'entrée 14 de la colonne 12A, 12B avec la première vanne V1.

L'étage de sortie 36 comprend, pour chaque colonne 12A, 12B, une vanne de sortie respective 36A, 36B propre à mettre indépendamment en communication la sortie 16 de la colonne 12A, 12B avec la deuxième vanne V2.

L'étage de piston 32 comprend, pour chaque colonne 12A, 12B, une vanne de piston respective 32A, 32B propre à mettre indépendamment en communication l'entrée 14 de la colonne 12A, 12B avec la source secondaire 26.

L'étage de régénération 38 comprend, pour chaque colonne 12A, 12B, une vanne de régénération respective 38A, 38B propre à mettre indépendamment en communication la sortie 16 de la colonne 12A, 12B avec la troisième vanne V3.

Les étages de purge amont 34 et aval 40 comprennent chacun, pour chaque colonne 12A, 12B, une vanne de purge amont 34A, 34B, respectivement une vanne de purge aval 40A, 40B, propre à mettre en communication indépendamment l'entrée 14, respectivement la sortie 16, de la colonne 12A, 12B avec l'atmosphère extérieure.

Le système de purification 10 comprend avantageusement un détecteur de premier gaz 50 et un détecteur de deuxième gaz 52, en sortie des colonnes 12A, 12B, respectivement agencés pour mesurer un taux volumique du premier gaz et un taux volumique de deuxième gaz, dans le flux s'écoulant à travers la deuxième vanne V2.

Avantageusement, le système de purification 10 comprend également un détecteur de purge 54 du premier gaz, agencé pour mesurer un taux volumique de premier gaz dans le flux s'écoulant vers l'atmosphère, à travers l'étage de purge aval 40.

Un procédé de purification de gaz mettant en oeuvre le dispositif de purification 10 va maintenant être décrit.

Dans la description du procédé, toute vanne n'étant pas décrite comme ouverte au cours d'une étape est fermée au cours de cette étape.

Le procédé comprend six étapes successives représentées sur les figures 1 à 6, et est exécuté de manière continue et cyclique, de sorte que le dispositif de purification 10 fonctionne sans nécessiter d'interruptions.

Ainsi, la première vanne V1 et la deuxième vanne V2 sont ouvertes continûment au cours des six étapes du procédé, de manière à délivrer le mélange de gaz à purifier par l'alimentation 18 et à récupérer le premier gaz purifié par le collecteur 20 en continu.

Le dispositif externe 22 génère le flux de gaz neutre fatal de manière continue, indépendamment du procédé de purification. La troisième vanne V3 est donc toujours ouverte

Le procédé de purification comprend une première étape représentée sur la figure 1, au cours de laquelle le mélange de gaz est purifié dans la première colonne 12A et la deuxième colonne 12B est régénérée.

La vanne d'alimentation 30A et la vanne de sortie 36A de la première colonne 12A sont ouvertes, de sorte que le mélange de gaz entre dans la première colonne 12A, est purifié par adsorption du deuxième gaz, et le premier gaz purifié sort de la première colonne 12A et est récupéré au collecteur 20. La pression dans la première colonne 12A est sensiblement égale à la pression du mélange de gaz à l'alimentation 18.

La vanne de régénération 38B et la vanne de purge amont 34B sont ouvertes, et la quatrième vanne est fermée, de sorte que le gaz neutre s'écoule à travers la deuxième colonne 12B, depuis la sortie 16 vers l'entrée 14. Le gaz neutre provoque la désorption du deuxième gaz adsorbé dans la deuxième colonne 12B, permettant sa régénération, et entraine le deuxième gaz désorbé dans l'atmosphère extérieure. La pression dans la deuxième colonne 12B est sensiblement égale à la pression atmosphérique, ou supérieure d'au plus 0,25 bar.

La première étape se poursuit jusqu'à ce que l'adsorption du deuxième gaz dans la première colonne 12A soit presque terminée, et qu'une inversion du rôle des colonnes 12A, 12B soit proche. L'inversion du rôle des colonnes se fait par la deuxième étape et la troisième étape.

Par exemple, la première étape se termine lorsque le taux de deuxième gaz sortant de la première colonne 12A, mesuré par le détecteur de deuxième gaz 52 dépasse un seuil prédéterminé, par exemple 2000 ppmv. Cela signale que le matériau adsorbant de la première colonne 12A est sensiblement saturé en deuxième gaz adsorbé, et que la première colonne 12A doit être régénérée.

Alternativement, la première étape se termine après l'écoulement d'une durée d'adsorption prédéterminée, dépendant des caractéristiques de la première colonne 12A et du mélange de gaz.

Au cours de la deuxième étape représentée sur la figure 2, la purification du mélange de gaz dans la première colonne 12A se poursuit. La régénération de la deuxième colonne 12B est stoppée, et le gaz neutre résiduel dans la deuxième colonne 12B est purgé.

Comme pour la première étape, les vannes d'alimentation 30A et de sortie 36A de la première colonne 12A sont ouvertes, et le mélange de gaz s'écoule à travers la première colonne 12A et est récupéré.

La vanne d'alimentation 30B et la vanne de purge aval 40B de la deuxième colonne 12B sont ouvertes, de sorte que le mélange de gaz entre dans la deuxième colonne 12B et chasse le gaz neutre résiduel vers la sortie reliée à l'atmosphère extérieure. La pression dans la deuxième colonne 12B s'élève jusqu'à être sensiblement égale à la pression d'entrée du mélange de gaz.

La quatrième vanne V4 est ouverte et le flux de gaz neutre fatal, non utilisé au cours de la deuxième étape, est relâché dans l'atmosphère.

La deuxième étape se termine lorsque la purge du gaz neutre résiduel dans la deuxième colonne 12B est terminée. La fin de la deuxième étape est détectée lorsqu'un taux de premier gaz en sortie de la deuxième colonne 12B, mesuré par le détecteur de purge 54, dépasse un seuil prédéterminé, par exemple 2%. Cela signale que le mélange de gaz a atteint la sortie 16 de la deuxième colonne 12B, et que celle-ci ne contient sensiblement plus de gaz neutre.

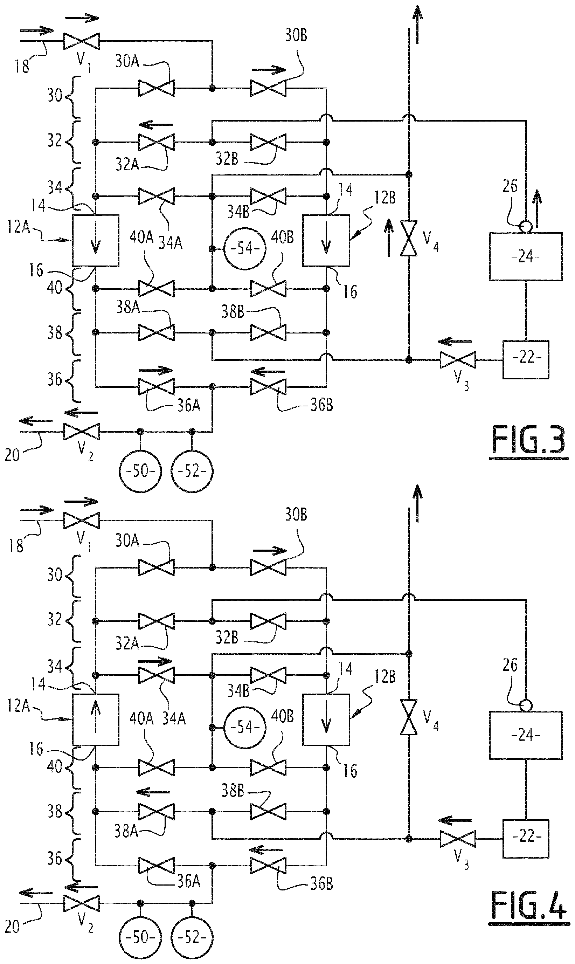

Au cours de la troisième étape représentée sur la figure 3, l'injection du mélange de gaz dans la première colonne 12A est interrompue et le mélange de gaz purifié restant dans la première colonne 12A est récupéré. Le mélange de gaz est injecté et purifié dans la deuxième colonne 12B.

La vanne de piston 32A et la vanne de sortie 36A de la première colonne 12A sont ouvertes, et la source secondaire 26 délivre le flux piston de gaz neutre. Le gaz neutre s'écoule dans la première colonne 12A et chasse le mélange de gaz résiduel à travers la première colonne 12A en direction du collecteur 20. La pression dans la première colonne s'élève jusqu'à être sensiblement égale à la pression de piston.

La vanne d'alimentation 30B et la vanne de sortie 36B de la deuxième colonne 12B sont ouvertes, et le mélange de gaz s'écoule à travers la deuxième colonne 12B et est purifié et récupéré par le collecteur 20. La pression dans la deuxième colonne 12B est sensiblement égale à la pression d'entrée du mélange de gaz.

La quatrième vanne V4 est ouverte et le flux de gaz neutre fatal, non utilisé au cours de la troisième étape, est relâché dans l'atmosphère.

La troisième étape se termine lorsque la récupération du premier gaz résiduel dans la première colonne 12A est achevée. La fin de la récupération est détectée lorsqu'un taux de premier gaz détecté par le détecteur de premier gaz en sortie 50 passe en dessous d'un seuil prédéterminé, par exemple 90%. Cela signale que le gaz neutre piston a atteint la sortie 16 de la première colonne 12A, et que celle-ci est prête pour être régénérée.

Au cours de la quatrième étape, symétrique de la première étape, représentée sur la figure 4, la première colonne 12A est régénérée. L'injection du mélange de gaz dans la deuxième colonne 12B se poursuit.

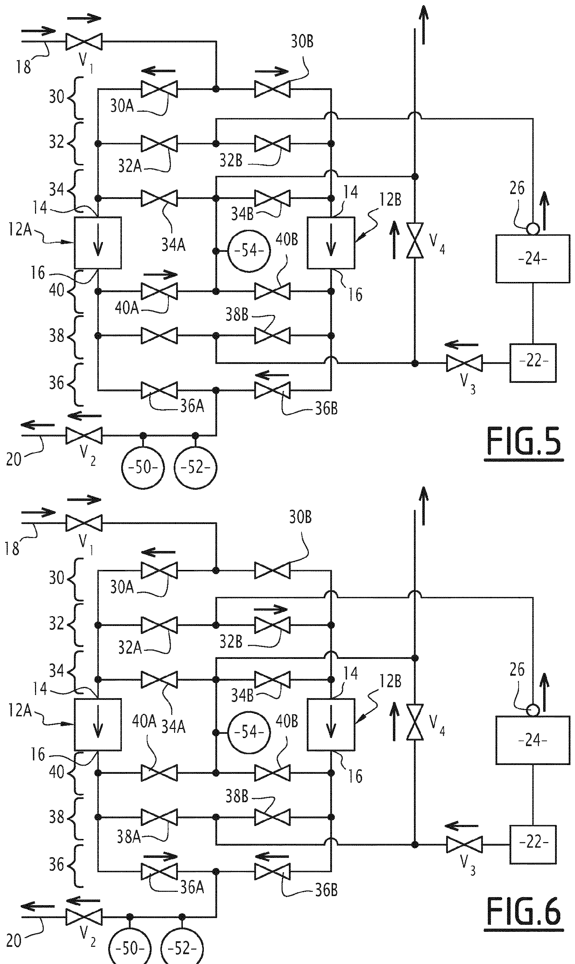

Au cours de la cinquième étape, symétrique de la deuxième étape, représentée sur la figure 5, la régénération de la première colonne 12A est achevée et le gaz neutre résiduel dans la première colonne 12A est purgé. La purification du mélange de gaz dans la deuxième colonne 12B se poursuit.

Au cours de la sixième étape, symétrique de la troisième étape, représentée sur la figure 6, le mélange de gaz est injecté et purifié dans la première colonne 12A. L'injection du mélange de gaz dans la deuxième colonne 12B est interrompue et le premier gaz résiduel dans la deuxième colonne 12B est récupéré.

Les quatrième, cinquième et sixième étapes sont similaires aux première, deuxième et troisième étapes respectivement, en inversant les rôles des deux colonnes 12A, 12B, et ne seront donc pas décrites plus en détail.

Le système de purification décrit permet par exemple de purifier un mélange de gaz riche en méthane et comprenant jusqu'à 3% de dioxyde de carbone jusqu'à un taux de dioxyde de carbone inférieur à 2300 ppmv. Ce taux est suffisant pour liquéfier le méthane pour le transport et l'utilisation, et est atteint sans nécessiter l'emploi de compresseurs ou de dispositifs de chauffage pour la purification. Ainsi, il présente une consommation énergétique faible, notamment inférieure à 3000 W, principalement pour l'alimentation des capteurs et des vannes automatiques, ce qui ne nécessite pas de hauts voltages.

Le système de purification ne nécessite pas d'installations particulières pour son alimentation en énergie, ni de machines tournantes lourdes et encombrantes et nécessitant une chaudronnerie spécifique. Il peut donc être mis en place rapidement et simplement sur un nouveau site d'exploitation sans nécessiter de travaux fastidieux, notamment en zone rurale et loin des réseaux électriques à forte puissance.

La Demanderesse a constaté, de manière surprenante, que le gaz neutre fatal directement émis par le dispositif externe, avec une température comprise entre 5°C et 40°C, et notamment entre 5°C et 30°C, et une pression comprise entre 1,5 bar et 10 bar, notamment entre 1,5 bar et 5 bar, pouvait être utilisé avec succès pour la régénération des colonnes. Dans l'état de la technique, le gaz utilisé pour la régénération est chauffé et/ou dépressurisé avant l'injection dans la colonne. La Demanderesse a découvert que ces étapes, qui augmentent l'efficacité du processus de régénération mais nécessitent une ingénierie et un apport d'énergie conséquents, ne sont pas nécessaires pour obtenir des niveaux de pureté tels que décrits plus haut.

De plus, le procédé décrit, grâce aux étapes de purge avant l'inversion des colonnes 12A, 12B, permet de limiter fortement les pertes en méthane lors de la purification, notamment à moins de 2%. Le procédé limite aussi la perte de charge entre l'entrée et la sortie à moins de 1 bar.

Selon un autre mode de réalisation, le dispositif externe 22 est un dispositif de liquéfaction de gaz, notamment de méthane, relié fluidiquement au collecteur 20 et recevant le gaz purifié à travers le collecteur 20. Le dispositif extérieur 22 est alors propre à liquéfier le gaz purifié, par exemple pour distribution, produisant le flux de gaz neutre fatal utilisé dans la régénération des colonnes 12A, 12B lors de la liquéfaction.

Le dispositif de purification 10 constitue alors une installation de production de gaz liquéfié, et notamment de méthane liquéfié.

## Revendications

1. Système de purification (10) d'un mélange de gaz comprenant au moins un premier gaz à purifier et un deuxième gaz à extraire, le système de purification (10) comprenant :
- au moins une première colonne (12A) et une deuxième colonne (12B) de purification, chaque colonne (12A, 12B) présentant une entrée (14) et une sortie (16) et contenant un matériau propre à adsorber le deuxième gaz ;
- une alimentation (18) de l'entrée (14) de chaque colonne (12A, 12B) en mélange de gaz, munie d'une première vanne (V1) ; et
- un collecteur (20) propre à recueillir du gaz purifié à la sortie (16) de chaque colonne (12A, 12B), muni d'une deuxième vanne (V2) ;
le système de purification (10) comprenant également :
- un dispositif externe (22), mettant en oeuvre une activité dont résulte une émission de gaz neutre fatal, non valorisé, le dispositif externe (22) étant relié fluidiquement aux colonnes (12A, 12B) de manière à récupérer le gaz neutre fatal et à le convoyer vers chaque colonne (12A, 12B), à travers une troisième vanne (V3),
le système de purification (10) étant configuré pour injecter le gaz neutre fatal dans les colonnes avec une température comprise entre 5°C et 40°C, notamment entre 5°C et 30°C, et avec une pression comprise entre 1,5 bar et 10 bar, notamment entre 1,5 bar et 5 bar,
**caractérisé en ce que** le système de purification (10) comprend de plus une source secondaire (26) de gaz neutre sous forme gazeuse et un étage de vannes de piston (32A, 32B), propre à mettre en communication chaque colonne (12A, 12B) indépendamment avec la source secondaire (26).

2. Système de purification (10) selon la revendication 1, comprenant :
- un étage de vannes d'alimentation (30A, 30B), propre à mettre en communication l'entrée (14) de chaque colonne (12A, 12B) indépendamment avec la première vanne (V1);
- un étage de vannes de sortie (36A, 36B), propre mettre en communication la sortie (16) de chaque colonne (12A, 12B) indépendamment avec la deuxième vanne (V2) ;
- un étage de vannes de régénération (38A, 38B), propre à mettre en communication chaque colonne (12A, 12B) indépendamment avec la troisième vanne (V3) ;
- un étage de vannes de purge amont (34A, 34B) et un étage de vannes de purge aval (40A, 40B), propres mettre en communication respectivement l'entrée (14) et la sortie (16) de chaque colonne (12A, 12B) indépendamment avec l'atmosphère.

3. Système de purification (10) selon la revendication 1 ou 2, dans lequel la source secondaire (26) est un réservoir d'alimentation du dispositif externe (22), notamment contenant le gaz neutre sous forme liquide.

4. Système de purification (10) selon l'une quelconque des revendications 1 à 3, dans lequel le premier gaz est le méthane, le deuxième gaz est le dioxyde de carbone et le gaz neutre est le diazote.

5. Procédé de purification d'un mélange de gaz comprenant au moins un premier gaz à purifier et un deuxième gaz à extraire, mettant en oeuvre un système de purification (10) selon l'une quelconque des revendications 1 à 4, le procédé comprenant les étapes suivantes :
- injection du mélange de gaz dans la première colonne (12A) de purification et adsorption du deuxième gaz dans la première colonne (12A) ;
- simultanément à l'injection dans la première colonne (12A), régénération de la deuxième colonne (12B) par circulation d'un flux de gaz neutre dans la deuxième colonne (12B) et désorption du deuxième gaz dans la deuxième colonne (12B) ;
- fin de l'injection dans la première colonne (12A) et de la régénération de la deuxième colonne (12B), et inversion des colonnes (12A, 12B);
- injection du mélange de gaz dans la deuxième colonne (12B) et adsorption du deuxième gaz dans la deuxième colonne (12B) ; et
- simultanément à l'injection dans la deuxième colonne (12B), régénération de la première colonne (12A) par circulation d'un flux de gaz neutre et désorption du deuxième gaz dans la première colonne (12A) ; et
- fin de l'injection dans la deuxième colonne (12B) et de la régénération de la première colonne (12A), inversion des colonnes (12A, 12B) et reprise du procédé à la première étape d'injection ;
**caractérisé en ce que** le flux de gaz neutre est un flux de gaz fatal issu du dispositif extérieur (22), injecté dans les colonnes (12A, 12B) avec une température comprise entre 5°C et 40°C, notamment entre 5°C et 30°C, et avec une pression comprise entre 1,5 bar et 10 bar, notamment entre 1,5 bar et 5 bar,
et dans lequel l'inversion des colonnes (12A, 12B) comprend une étape de récupération du mélange de gaz résiduel dans la colonne (12A, 12B) dans laquelle l'étape d'injection vient de se finir, par l'envoi d'un flux piston de gaz neutre par l'entrée (14) de la colonne (12A, 12B), avant la régénération de la colonne (12A, 12B).

6. Procédé selon la revendication 5, dans lequel l'inversion des colonnes (12A, 12B) comprend une étape de purge du gaz neutre résiduel dans la colonne (12A, 12B) dans laquelle la régénération vient de se finir, par l'envoi du mélange de gaz à l'entrée (14) de la colonne (12A, 12B) et la mise en communication de la sortie (16) de la colonne (12A, 12B) avec l'atmosphère.

7. Procédé selon l'une quelconque des revendications 5 à 6, dans lequel l'étape de fin de l'injection et de la régénération et d'inversion des colonnes (12A, 12B) est déclenchée quand un taux de deuxième gaz, mesuré à en amont du collecteur (20), passe au-dessus d'un seuil prédéterminé.

8. Installation de production de gaz liquéfié, comprenant un système de purification (10) d'un mélange de gaz selon l'une quelconque des revendications 1 à 4, dans laquelle le dispositif externe (22) comprend un dispositif de liquéfaction de gaz recevant le gaz purifié à travers le collecteur (20),
le dispositif de liquéfaction comprenant un réservoir de gaz neutre liquide et un échangeur thermique propre à mettre en contact thermique le gaz purifié et le gaz neutre liquide, de sorte à liquéfier le gaz purifié et à vaporiser le gaz neutre,
le dispositif de liquéfaction étant configuré pour récupérer le gaz neutre vaporisé et l'envoyer vers les colonnes (12A, 12B).

## Patentansprüche

1. Aufreinigungssystem (10) eines Gasgemischs, umfassend mindestens ein erstes Gas, das aufgereinigt werden soll und ein zweites Gas, das extrahiert werden soll, das Aufreinigungssystem (10) umfassend:
- mindestens eine erste Säule (12A) und eine zweite Säule (12B) zum Aufreinigen, wobei jede Säule (12A, 12B) einen Einlass (14) und einen Auslass (16) aufweist und ein Material enthält, das geeignet ist, um das zweite Gas zu adsorbieren;
- eine Versorgung (18) des Einlasses (14) jeder Säule (12A, 12B) mit einem Gasgemisch, die mit einem ersten Ventil (V1) versehen ist; und
- einen Verteiler (20), der geeignet ist, um aufgereinigtes Gas am Auslass (16) jeder Säule (12A, 12B) aufzunehmen, und der mit einem zweiten Ventil (V2) versehen ist;
das Aufreinigungssystem (10) ferner umfassend:
- eine externe Vorrichtung (22), die eine Aktivität durchführt, aus der eine Emission von neutralem, nicht verwertetem Gas resultiert, wobei die externe Vorrichtung (22) fluidisch mit den Säulen (12A, 12B) verbunden ist, um das fatale neutrale Gas zu sammeln und es durch ein drittes Ventil (V3) zu jeder Säule (12A, 12B) zu befördern,
wobei das Aufreinigungssystem (10) konfiguriert ist, um das fatale neutrale Gas mit einer Temperatur zwischen 5 °C und 40 °C, insbesondere zwischen 5 °C und 30 °C, und mit einem Druck zwischen 1,5 bar und 10 bar, insbesondere zwischen 1,5 bar und 5 bar, in die Säulen zu injizieren,
**dadurch gekennzeichnet, dass** das Aufreinigungssystem (10) ferner eine sekundäre Quelle (26) für neutrales Gas in Gasform und eine Stufe von Kolbenventilen (32A, 32B) umfasst, die geeignet sind, um jede Säule (12A, 12B) unabhängig mit der sekundären Quelle (26) in Verbindung zu bringen.

2. Aufreinigungssystem (10) nach Anspruch 1, umfassend:
- eine Stufe von Zufuhrventilen (30A, 30B), die dazu geeignet sind, um den Einlass (14) jeder Säule (12A, 12B) unabhängig mit dem ersten Ventil (V1) zu verbinden;
- eine Stufe von Auslassventilen (36A, 36B), die geeignet sind, um den Auslass (16) jeder Säule (12A, 12B) unabhängig mit dem zweiten Ventil (V2) in Verbindung zu bringen
- eine Stufe von Regenerationsventilen (38A, 38B), die geeignet sind, um jede Säule (12A, 12B) unabhängig mit dem dritten Ventil (V3) zu verbinden;
- eine stromaufwärtige Stufe von Spülventilen (34A, 34B) und eine stromabwärtige Stufe von Spülventilen (40A, 40B), die geeignet sind, um den Einlass (14) bzw. den Auslass (16) jeder Säule (12A, 12B) unabhängig mit der Atmosphäre in Verbindung zu bringen.

3. Aufreinigungssystem (10) nach Anspruch 1 oder 2, wobei die sekundäre Quelle (26) ein Versorgungsbehälter für die externe Vorrichtung (22) ist, der insbesondere das neutrale Gas in flüssiger Form enthält.

4. Aufreinigungssystem (10) nach einem der Ansprüche 1 bis 3, wobei das erste Gas Methan ist, das zweite Gas Kohlendioxid ist und das neutrale Gas Distickstoff ist.

5. Aufreinigungsverfahren eines Gasgemischs, umfassend mindestens ein erstes Gas, das aufgereinigt werden soll, und ein zweites Gas, das extrahiert werden soll, wobei ein Aufreinigungssystem (10) nach einem der Ansprüche 1 bis 4 eingesetzt wird, das Verfahren umfassend die folgenden Schritte:
- Injektion des Gasgemischs in die erste Säule (12A) zur Aufreinigung und Adsorption des zweiten Gases in der ersten Säule (12A);
- Gleichzeitig mit der Injektion in die erste Säule (12A), Regenerierung der zweiten Säule (12B) durch Zirkulation eines neutralen Gasstroms in der zweiten Säule (12B) und Desorption des zweiten Gases in der zweiten Säule (12B);
- Ende der Injektion in die erste Säule (12A) und der Regenerierung der zweiten Säule (12B) und Umkehrung der Säulen (12A, 12B);
- Injektion des Gasgemischs in die zweite Säule (12B) und Adsorption des zweiten Gases in der zweiten Säule (12B); und
- gleichzeitig mit der Injektion in die zweite Säule (12B), Regenerierung der ersten Säule (12A) durch Zirkulation eines neutralen Gasstroms und Desorption des zweiten Gases in der ersten Säule (12A); und
- Ende der Injektion in die zweite Säule (12B) und der Regenerierung der ersten Säule (12A), Umkehrung der Säulen (12A, 12B) und Wiederaufnahme des Verfahrens bei der ersten Injektionsstufe;
**dadurch gekennzeichnet, dass** der neutrale Gasstrom ein aus der externen Vorrichtung (22) stammender Strom fatalen Gases ist, der mit einer Temperatur zwischen 5 °C und 40 °C, insbesondere zwischen 5 °C und 30 °C, und mit einem Druck zwischen 1,5 bar und 10 bar, insbesondere zwischen 1,5 bar und 5 bar, in die Säulen (12A, 12B) eingeleitet wird,
und wobei die Umkehrung der Säulen (12A, 12B) einen Rückgewinnungsschritt des Restgasgemischs in der Säule (12A, 12B) umfasst, in der der Injektionsschritt gerade beendet wurde, durch die Zufuhr eines Kolbenstroms von neutralem Gas durch den Einlass (14) der Säule (12A, 12B), bevor die Säule (12A, 12B) regeneriert wird.

6. Verfahren nach Anspruch 5, wobei die Umkehrung der Säulen (12A, 12B) einen Schritt umfasst, bei dem das restliche neutrale Gas in der Säule (12A, 12B), in der die Regeneration gerade beendet wurde, gespült wird, indem das Gasgemisch zu dem Einlass (14) der Säule (12A, 12B) geleitet wird und der Auslass (16) der Säule (12A, 12B) mit der Atmosphäre in Verbindung gebracht wird.

7. Verfahren nach einem der Ansprüche 5 bis 6, bei dem der Schritt zum Beenden der Injektion und Regenerierung und Umkehrung der Säulen (12A, 12B) eingeleitet wird, wenn ein Anteil des zweiten Gases, der stromaufwärts des Verteilers (20) gemessen wird, über einen vorbestimmten Schwellenwert steigt.

8. Anlage zur Herstellung von Flüssiggas, umfassend ein Aufreinigungssystem (10) eines Gasgemischs nach einem der Ansprüche 1 bis 4, wobei die externe Vorrichtung (22) eine Gasverflüssigungsvorrichtung umfasst, die das aufgereinigte Gas durch den Verteiler (20) aufnimmt,
die Verflüssigungsvorrichtung umfassend einen Behälter für flüssiges neutrales Gas und einen Wärmetauscher, der geeignet ist, um das aufgereinigte Gas und das flüssige neutrale Gas in thermischen Kontakt zu bringen, um das aufgereinigte Gas zu verflüssigen und das neutrale Gas zu verdampfen,
wobei die Verflüssigungsvorrichtung konfiguriert ist, um das verdampfte neutrale Gas zurückzugewinnen und es zu den Säulen (12A, 12B) zu leiten.

## Claims

1. - A system (10) for purifying a gas mixture comprising at least one first gas to be purified and a second gas to be extracted, the purification system (10) comprising:
- at least one first purification column (12A) and one second purification column (12B), each column (12A, 12B) having an inlet (14) and an outlet (16) and containing a material suitable for adsorbing the second gas;
- a gas mixture feed (18) to the inlet (14) of each column (12A, 12B), fitted with a first valve (V1); and
- a manifold (20) for collecting purified gas at the outlet (16) of each column (12A, 12B), fitted with a second valve (V2);
the purification system (10) also comprising:
- an external device (22), carrying out an activity resulting in the emission of non-recovered associated neutral gas, the external device (22) being fluidically connected to the columns (12A, 12B) so as to recover the associated neutral gas and convey it to each column (12A, 12B) through a third valve (V3),
the purification system (10) being configured to inject the associated neutral gas into the columns at a temperature of between 5 °C and 40 °C, in particular between 5 °C and 30 °C, and at a pressure of between 1.5 bar and 10 bar, in particular between 1.5 bar and 5 bar,
**characterised in that** the purification system (10) further comprises a secondary source (26) of neutral gas in gaseous form and a stage of piston valves (32A, 32B) adapted to put each column (12A, 12B) independently in communication with the secondary source (26).

2. - The purification system (10) according to claim 1, comprising:
- a stage of feed valves (30A, 30B), suitable for connecting the inlet (14) of each column (12A, 12B) independently to the first valve (V1);
- a stage of outlet valves (36A, 36B), suitable for connecting the outlet (16) of each column (12A, 12B) independently to the second valve (V2);
- a stage of regeneration valves (38A, 38B), suitable for connecting each column (12A, 12B) independently to the third valve (V3);
- a stage of upstream purge valves (34A, 34B) and a stage of downstream purge valves (40A, 40B), suitable for respectively connecting the inlet (14) and the outlet (16) of each column (12A, 12B) independently to the atmosphere.

3. - The purification system (10) according to claim 1 or 2, in which the secondary source (26) is a tank for supplying the external device (22), in particular containing the neutral gas in liquid form.

4. - The purification system (10) according to any one of claims 1 to 3, in which the first gas is methane, the second gas is carbon dioxide and the neutral gas is dinitrogen.

5. - A process for purifying a gas mixture comprising at least one first gas to be purified and a second gas to be extracted, using a purification system (10) according to any one of claims 1 to 4, the process comprising the following steps:
- injecting the gas mixture into the first purification column (12A) and adsorbing the second gas into the first column (12A);
- simultaneously with injecting into the first column (12A), regenerating the second column (12B) by circulating a stream of neutral gas into the second column (12B) and desorption of the second gas into the second column (12B);
- terminating the injecting into the first column (12A) and the regenerating of the second column (12B), and swapping the columns (12A, 12B);
- injecting the gas mixture into the second column (12B) and adsorbing the second gas into the second column (12B); and
- simultaneously with injecting into the second column (12B), regenerating the first column (12A) by circulating a stream of neutral gas and desorbing the second gas from the first column (12A); and
- terminating the injecting into the second column (12B) and the regenerating of the first column (12A), swapping the columns (12A, 12B) and resuming the process at the first step of injecting;
**characterised in that** the neutral gas flow is an associated gas flow from the external device (22), injected into the columns (12A, 12B) at a temperature of between 5 °C and 40 °C, in particular between 5 °C and 30 °C, and at a pressure of between 1.5 bar and 10 bar, in particular between 1.5 bar and 5 bar,
and in which the swapping of the columns (12A, 12B) comprises a step of recovering the residual gas mixture in the column (12A, 12B) in which the injection step has just ended, by sending a piston flow of neutral gas through the inlet (14) of the column (12A, 12B), before regenerating the column (12A, 12B).

6. - The process according to claim 5, in which the swapping of the columns (12A, 12B) comprises a step of purging the residual neutral gas in the column (12A, 12B) in which the regeneration has just ended, by sending the gas mixture to the inlet (14) of the column (12A, 12B) and placing the outlet (16) of the column (12A, 12B) in communication with the atmosphere.

7. - The process according to any one of claims 5 to 6, in which the step of terminating injection and regeneration and swapping the columns (12A, 12B) is triggered when a rate of second gas, measured upstream of the manifold (20), rises above a predetermined threshold.

8. - A plant for producing liquefied gas, comprising a system (10) for purifying a gas mixture according to any one of claims 1 to 4, in which the external device (22) comprises a gas liquefaction device receiving the purified gas through the manifold (20),
the liquefaction device comprising a reservoir of liquid neutral gas and a heat exchanger adapted to bring the purified gas and the liquid neutral gas into thermal contact so as to liquefy the purified gas and vaporise the neutral gas,
the liquefaction device being configured to recover the vaporised neutral gas and send it to the columns (12A, 12B).
